# EUROPÄISCHE PATENTSCHRIFT

(11) **EP 1 428 698 B1**
(45) Veröffentlichungstag und Bekanntmachung des Hinweises auf die Patenterteilung: **04.01.2006**
(21) Anmeldenummer: 04004607.0
(22) Anmeldetag: 29.05.1996
(51) Int. Cl.: B60G 7/00, B60G 9/00

(54) **Achsaufhängung für Starrachsen in Fahrzeugen**
Axle suspension for rigid axles in vehicles
Suspension d'essieu pour essieux rigides de véhicules

(30) Priorität: 16.06.1995 DE 19521874
(43) Veröffentlichungstag der Anmeldung: 16.06.2004
(62) Teilanmeldung aus: 00117760.9
(73) Patentinhaber: ZF Lemförder Metallwaren AG, 49448 Lemförde (DE)
(72) Erfinder: Buhl, Reinhard, 49163 Bohmte (DE)

(56) Entgegenhaltungen:
- EP-A- 0 430 368
- DE-A- 2 523 916
- FR-A- 2 563 473
- US-A- 4 084 838
- PATENT ABSTRACTS OF JAPAN Bd. 0152, Nr. 83 (M-1137), 18. Juli 1991 (1991-07-18) & JP 3 099915 A (SUZUKI MOTOR CORP), 25. April 1991 (1991-04-25)

## Beschreibung

Die Erfindung bezieht sich auf eine Achsaufhängung für Starrachsen in Fahrzeugen, insbesondere Nutzfahrzeugen nach dem Oberbegriff des Patentanspruches 1.

Bekannt sind die Ausbildungsmerkmale nach dem Oberbegriff des Anspruches 1 aus der gattungsbildenden DE 25 23 916 B2. In der Druckschrift wird eine Hinterachsaufhängung für Kraftfahrzeuge offenbart, bei der zur Achsführung zwei, sich im wesentlichen parallel zur Fahrzeuglängsrichtung erstreckende, untere Längslenker und zwei sich dazu ebenfalls parallel erstreckende obere Längslenker vorgesehen sind, wobei ein verdrehweich ausgebildetes Kupplungsglied über eine Schraubverbindung an den beiden oberen Längslenkern in Querrichtung montiert ist und die Lenker somit verbindet. Dieses Kupplungsglied ist mit den beiden oberen Längslenkern in einem geringen Abstand zu ihren vorderen Anlenkungen am Aufbau des Fahrzeuges angeordnet und bildet somit eine Art Mehrfachlenker. Der Mehrfachlenker und die Stabilisierungseinrichtung sind als ein einstückiger, verwindbarer, beide Funktionen integrierender Vierpunktlenker mit definierter Verwindungskennlinie ausgebildet.

Eine derartige Lösung geht auch aus der US 4,084,838 hervor. Die in dieser Druckschrift offenbarte Achsaufhängung weist jedoch zwei oberhalb der Fahrzeugachse angeordnete Längslenker auf, die durch ein Verbindungselement gekoppelt sind, das durch mehrere Verschraubungen an den Längslenkern befestigt wird und erst damit einen Mehrfachlenker bildet. Durch das Erfordernis der Montage des Mehrfachlenkers ist eine derartige Achsaufhängung kostenintensiv.

Aus JP 3-99915 (A) (Patents Abstracts of Japan M-1137 July 18, 1991 Vol. 15/No.283) ist darüber hinaus eine Achsaufhängung bekannt, bei der einerseits unterhalb der Fahrzeughinterachse zwei Längslenker über Molekulargelenke angelenkt und diese Lenker andererseits am Fahrzeugaufbau befestigt sind. Zusätzlich werden in dieser bekannten Ausführungsform etwa achsmittig zwei über eine Querstrebe verbundene Längslenker angeordnet. Nachteilig ist bei einer derartigen Achsaufhängung jedoch, dass die Wankneigung des Fahrzeuges um die Fahrzeugquerachse nicht hinreichend ausgeglichen werden kann. Durch die mittig angeordnete Querstrebe zwischen den Längslenkern ist eine solche Ausführung verdrehweich und vermag keine hinreichende Querstabilität zu gewährleisten.

Ferner geht aus EP 0 430 368 A1 eine Achsaufhängung für ein Kraftfahrzeug mit Gasfederung hervor, die einen Mehrfachlenker aufweist, der einerseits mit der Fahrzeugachse und andererseits mit dem Fahrzeugaufbau gelenkig verbunden ist und seitlichen Wank- und Kippbewegungen entgegenwirkt. Dieser Mehrfachlenker ist als Hohlkörper aus Blech hergestellt. Die Herstellung eines derartigen Bauelementes ist sehr aufwendig und damit kostenintensiv. Weiterhin sind bei der Verwendung von Blech als Grundmaterial Festigkeitsanforderungen nur begrenzt realisierbar.

Der Erfindung liegt die Aufgabe zugrunde, eine vereinfachte, raum- und kostensparende Gestaltung einer Achsaufhängung zu entwickeln.

Gelöst wird diese Aufgabe durch die Ausbildungsmerkmale des Patentanspruches 1. Ausgestaltungen der Erfindung sind Gegenstand der jeweiligen Unteransprüche.

Erreicht wird durch diese Ausbildungsmerkmale eine Integration der Elemente zur Achsführung und der Elemente zur Querstabilisierung des Fahrzeugaufbaus gegenüber der Fahrzeugachse in einem Bauteil.
Ein besonderer Vorteil der erfindungsgemäßen Ausbildung liegt in der Möglichkeit der Substitution bereits eingebauter Achsführungselemente durch eine erfindungsgemäß ausgebildete Achsaufhängung unter Verwendung der am Fahrzeugaufbau und an der Fahrzeugachse vorhandenen Lagerelemente.
Darüber hinaus ist es bei einer erfindungsgemäßen Ausführungsform einer Achsaufhängung möglich, die Wankstabilität sehr genau zu bestimmen, wobei gegenüber bekannten Ausführungen größere Kräfte und Drehmomente aufgenommen werden können.

Gesonderter Bauraum für die Lagerung eines Stabilisatorstabes ist nicht mehr erforderlich. Es entfallen die Lagerelemente für den Stabilisatorstab an der Fahrzeugachse und auch am Fahrzeugaufbau. Damit einhergehend ist die erfindungsgemäße Achsaufhängung gegenüber bekannten Ausbildungen kostensparend, weil sie weniger Einzelteile aufweist und weniger Montagearbeit erfordert.

In der Zeichnung sind Ausführungsbeispiele der Erfindung teils schematisch dargestellt. Die Figuren 1 bis 9 sind dabei lediglich zum besseren Verständnis beigefügt. Sie betreffen nicht die vorliegende Erfindung. Es zeigen im Einzelnen:
**Figur 1:** eine Draufsicht auf ein erstes Ausführungsbeispiel,
**Figur 2:** eine Seitenansicht der Anordnung nach Figur 1,
**Figur 3**: eine im Vergleich zu Figur 1 im Maßstab vergrößerte Ansicht des Vierpunktlenkers und
**Figuren 4-10:** Draufsichten auf Ausführungsbeispiele für die Gestaltung des Vierpunktlenkers.

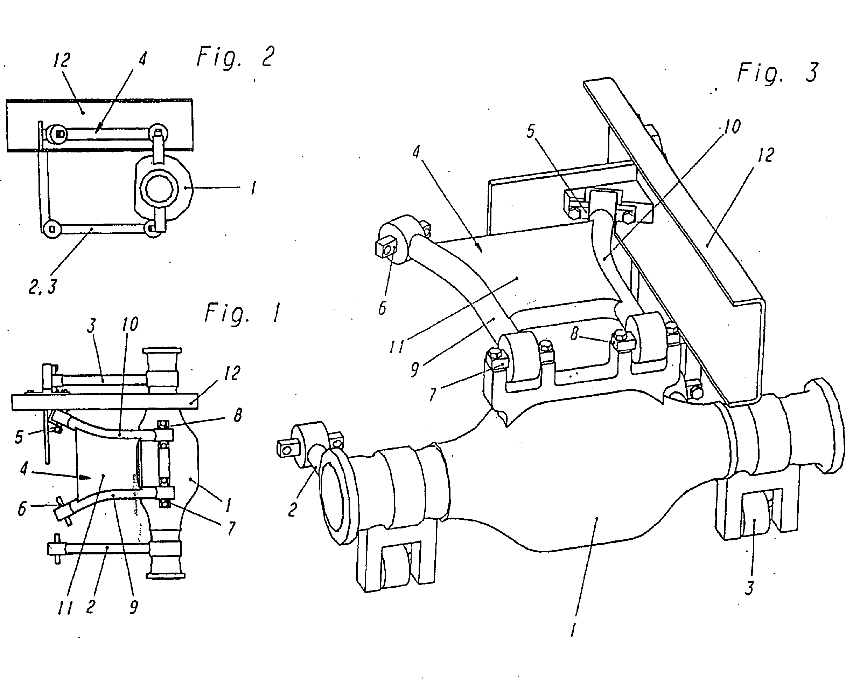

In den Ausführungsbeispielen ist die Fahrzeugachse 1 an beiden Fahrzeugseiten mit einem erheblichen Abstand von der Längsmitte des Fahrzeuges durch Längslenker 2 und 3 und in der Fahrzeugmitte durch einen in der Höhenlage dazu versetzt angeordneten Vierpunktlenker 4 mit dem Fahrzeugaufbau verbunden. Der Fahrzeugaufbau ist in den Figuren 1-3 bereichsweise schematisch dargestellt. In den Figuren 1-3 wird aus Gründen der besseren Übersichtlichkeit die nur die einseitige Anbindung des Vierpunktlenkers an den Fahrzeugrahmen 12 gezeigt. Die Gelenkverbindungen der Längslenker 2 und 3 befinden sich unterhalb der Fahrzeugachse 1, während der Vierpunktlenker 4 oberhalb der Fahrzeugachse 1 in einem gegenüber den Längslenkern 2 und 3 unterschiedlichen Höhenniveau angeordnet ist. Alle Gelenkverbindungen sind kardanisch beweglich ausgeführt und bestehen vorzugsweise aus Kugelgelenken.

Der Vierpunktlenker 4 in den Ausführungsbeispielen der Figuren 1 bis 3 besteht aus zwei stabilen Gelenkarmen 9 und 10, die durch ein plattenförmiges Flächentragwerk 11 fest miteinander verbunden sind, welches verwindbar ausgeführt ist, wobei die Verwindung einer definierten Kennlinie unterliegt. Die aus den Gelenkarmen 9 und 10 mit dem Flächentragwerk 11 gebildete Rahmenkonstruktion ist mit an den einen Enden der Gelenkarme 9 und 10 befestigten Gelenken 5 und 6 an der Fahrzeugkarosserie befestigbar und wird mit den an den anderen Enden der Gelenkarme 9 und 10 angeordneten Gelenken 7 und 8 an der Fahrzeugachse 1 bzw. an einem mit der Fahrzeugachse verbundenen Stützkörper 1. 1 befestigt. Diese Ausbildung des Vierpunktlenkers 4 ermöglicht Pendelbewegungen der Fahrzeugachse 1 gegenüber der Fahrzeugkarosserie quer zur Fahrtrichtung. Die dabei auftretende Verwindung des Flächentragwerks ruft durch Torsionsspannungen Rückstellkräfte für die Wiederherstellung der Nullage hervor. Wie in Figur 3 dargestellt, kann das Flächentragwerk im einfachsten Falle eine in sich geschlossene, plattenförmige Verbindung sein. Eine derartige Ausführung ist besonders einfach herstellbar und damit sehr kostengünstig. Darüber hinaus läßt sich hierbei der Drehmomentenverlauf innerhalb des Flächentragwerkes exakt bestimmen, sodass eine den Belastungsverhältnissen genau angepaßte konstruktive Auslegung möglich ist.

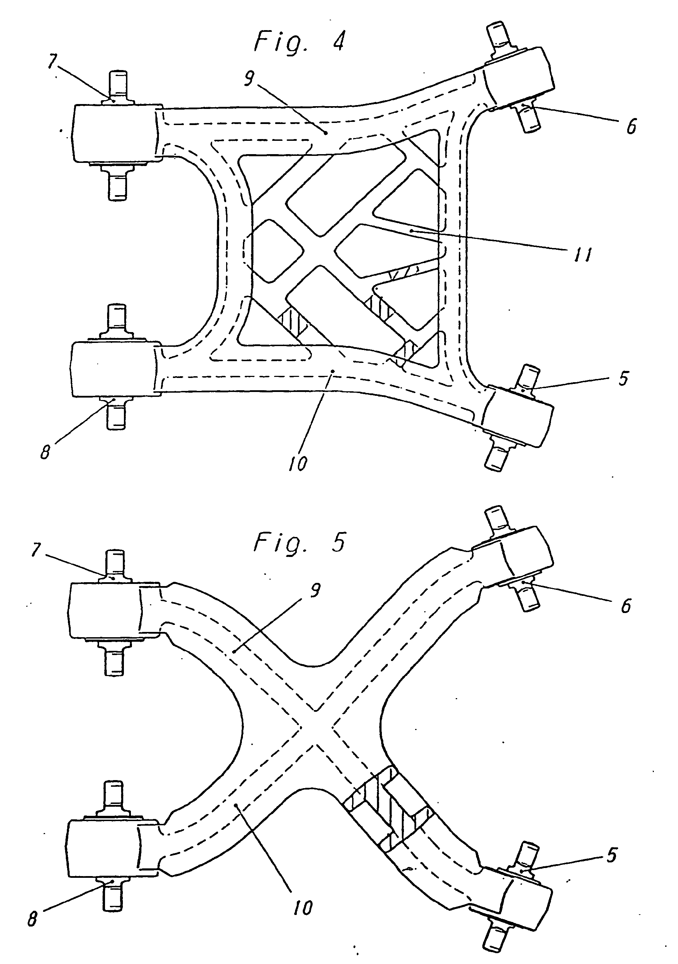

Die Figuren 4 bis 10 zeigen unterschiedliche Ausbildungen des Vierpunktlenkers 4. Die Gelenkarme 9 und 10 sind bei dem Ausführungsbeispiel nach der Figur 4 in ein Flächentragwerk aus unterschiedlich angeordneten Streben integriert, wobei die Lage der Streben und deren Querschnittsgestaltung ebenfalls eine ziemlich genaue Definierung der Kennlinie der sich bei der Verwindung des Flächentragwerks aufbauenden Rückstellkräfte ermöglicht. Die Gelenke zur Befestigung des Vierpunktlenkers einerseits an der Fahrzeugachse und andererseits an der Karosserie sind an den Enden der Gelenkarme 9 und 10 angeordnet.

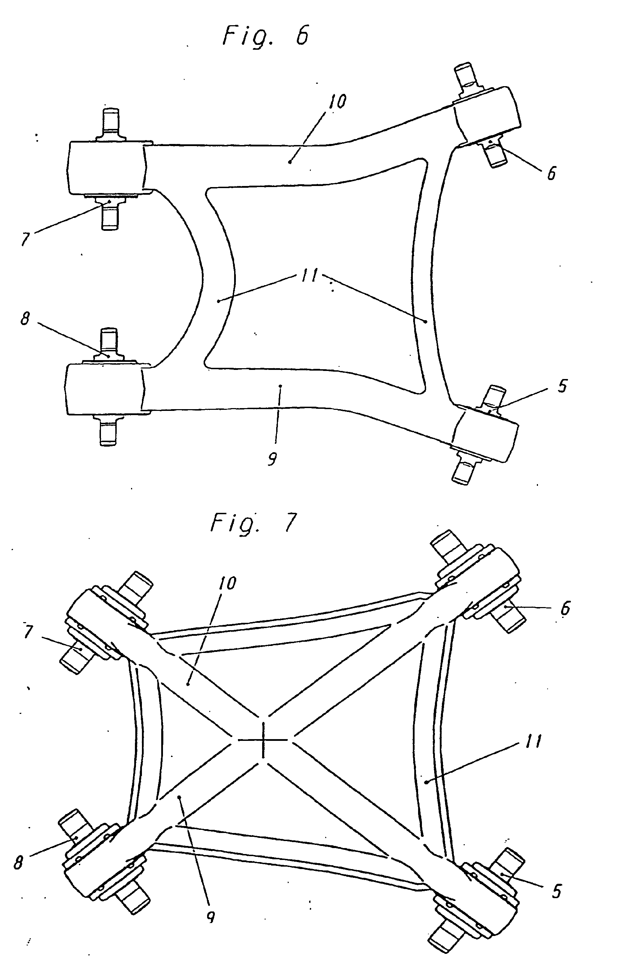

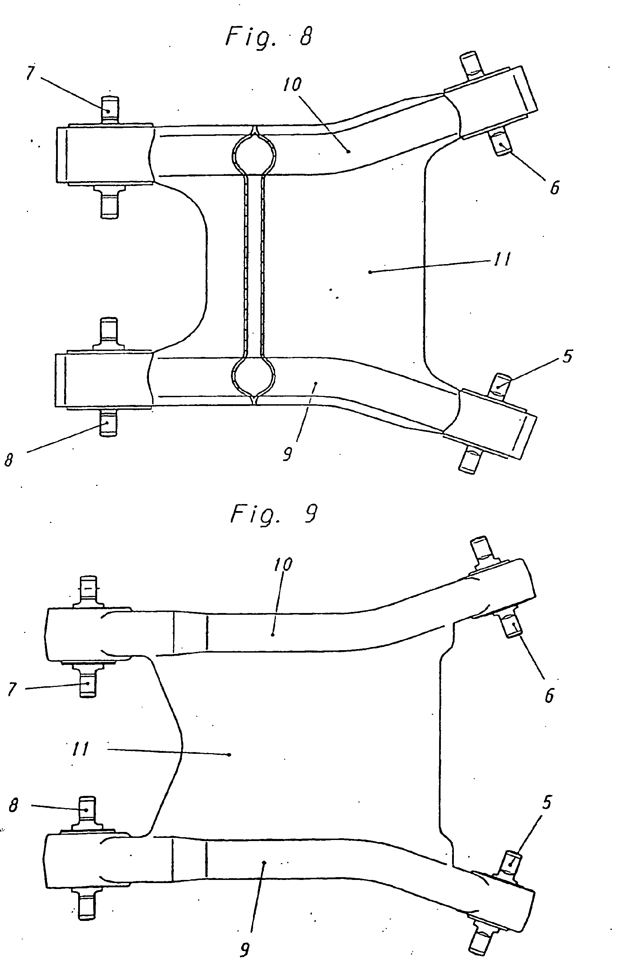

Die Figuren 6 und 8 geben Draufsichten eines Vierpunktlenkers wieder, bei dem die Gelenkarme 9 und 10 durch im Wesentlichen geschlossene Flächentragwerke miteinander verbunden sind. Dieses Flächentragwerk ist in der Figur 6 durch Randverstärkungen zusätzlich versteift und bildet somit ein Rahmenprofil. Die Figuren 4-10 zeigen ferner die Möglichkeit der Anordnung von Ausschnitten in einem in sich geschlossenen Flächentragwerk zur Beeinflussung der Kennlinie der sich bei der Verwindung aufbauenden Rückstellkräfte. Bei dem Ausführungsbeispiel in Figur 7 sind die beiden Gelenkarme in sich kreuzender Lage angeordnet und bilden somit Rippen auf einem an den Rändern ebenfalls Verstärkungen aufweisenden Flächentragwerk. Ein vergleichbares Ergebnis läßt sich auch mit einem Vierpunktlenker in X-förmiger Draufsicht entsprechend der Darstellung in Figur 5 erreichen. An den Armenden des X-förmigen Kreuzes sind die Gelenke 5 und 6 für die Befestigung an der Karosserie und die Gelenke 7 und 8 für die Befestigung an der Fahrzeugachse angeordnet. Das Querschnittsprofil der Arme wird den Gegebenheiten angepaßt und kann beispielsweise doppel-T-förmig sein, wie es in der Zeichnungsfigur angedeutet ist, oder aus einem Hohlprofil bestehen. Hierfür sind unterschiedliche Materialien einsetzbar.
In der Figur 8 ist zwischen den Gelenkarmen 9 und 10 eine mögliche Profilierung des Vierpunktlenkers eingezeichnet, der in dem gezeigten Beispiel ein Hohlprofil ist.

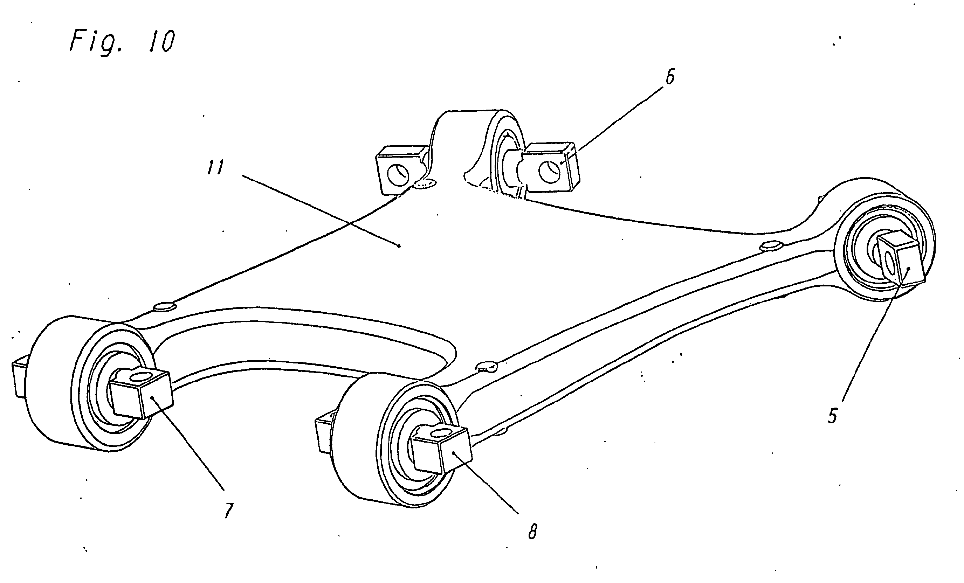

Entsprechend Figur 10 können die Lenkerarme auch vollständig in dem Vierpunktlenker aufgehen, sodass, wie hier gezeigt, ein in sich geschlossenes, einteiliges Bauteil entsteht. Das Flächentragwerk 11 ist entsprechend Figur 10 als ebene Fläche gestaltet. Es ist sehr vorteilhaft, einen derart gestalteten Vierpunktlenker als Hohlprofil auszubilden. Somit ergibt sich eine erhebliche Gewichtsersparnis.

## Patentansprüche

1. Achsaufhängung für Starrachsen in Fahrzeugen, insbesondere Nutzfahrzeugen, bei der zur Achsführung auf jeder Fahrzeugseite etwa auf gleicher Höhe wenigstens ein sich in Fahrzeuglängsrichtung erstreckender, die Fahrzeugachse (1) mit dem Fahrzeugaufbau vertikal beweglich verbindender Längslenker (2,3) eines Längslenkerpaares und davon in der Höhenlage abweichend ein Vierpunktlenker (4) vorgesehen ist, der die Funktionen eines Mehrfachlenkers und einer seitlichen Wank- und Kippbewegungen durch
Torsionsspannungen entgegenwirkenden Stabilisierungseinrichtung integriert, wobei der Vierpunktlenker (4) zwei sich in Fahrzeuglängsrichtung erstreckende Gelenkarme (9, 10) aufweist, die durch ein verwindbares Flächentragwerk (11) fest miteinander verbunden sind, wobei der Vierpunktlenker (4) mit an den Enden der Gelenkarme (9, 10) befestigten, in Fahrzeugquerrichtung einen Abstand voneinander aufweisenden Gelenken (5,6),(7,8) einerseits mit der Fahrzeugachse (1) und andererseits mit dem Fahrzeugaufbau verbunden ist,
**dadurch gekennzeichnet, dass**
das als ebene Fläche gestaltete Flächentragwerk (11) als eine in sich geschlossene, plattenförmige Verbindung mit definierter Verwindungskennlinie ausgeführt ist.

2. Achsaufhängung nach Anspruch 1,
**dadurch gekennzeichnet, dass**
der Vierpunktlenker (4) als Hohlprofil ausgeführt ist.

3. Achsaufhängung nach einem der vorstehend genannten Ansprüche,
**dadurch gekennzeichnet, dass**
der Vierpunktlenker (4) derart ausgeführt ist, dass die Gelenkarme (9, 10) vollständig in dem als ebene Fläche gestalteten Flächentragwerk aufgehen, sodass insgesamt ein in sich geschlossenes, einteiliges Bauteil entsteht.

4. Achsaufhängung nach einem der vorstehend genannten Ansprüche,
**dadurch gekennzeichnet, dass**
der Vierpunktlenker (4) oberhalb der Fahrzeugachse (1) an diese angelenkt ist.

5. Achsaufhängung nach einem der vorstehend genannten Ansprüche,
**dadurch gekennzeichnet, dass**
der Vierpunktlenker (4) über Kugelgelenke (5,6) mit dem Fahrzeugaufbau und über Kugelgelenke (7,8) mit der Fahrzeugachse (1) verbunden ist.

## Claims

1. Axle suspension for rigid axles in vehicles, in particular commercial vehicles, in which at least one longitudinal link (2, 3) of a longitudinal link pair extending in the vehicle longitudinal direction and linking the vehicle axle (1) to the vehicle body so as to be vertically displaceable is provided on each vehicle side at approximately the same height to guide the axle and a four-point linkage (4) is provided at a different height therefrom, which integrates the functions of a multiple linkage and a stabilising device counteracting lateral rocking and tilting movements due to torsional stress, which four-point linkage (4) has two articulated arms (9, 10) extending in the vehicle longitudinal direction which are fixedly joined to one another by means of a distortable flat support (11), and which four-point linkage (4) is connected by means of articulated joints (5, 6), (7, 8) spaced at a distance apart from one another in the vehicle transverse direction on the ends of the articulated arms (9, 10) to the vehicle axle (1) at one end and to the vehicle body at the other end,
**characterised in that**
the flat support (11) designed with a planar surface is provided in the form of an intrinsically closed, plate-shaped link with a defined torsion characteristic curve.

2. Axle suspension as claimed in claim 1,
**characterised in that**
the four-point linkage (4) is provided in the form of a hollow section.

3. Axle suspension as claimed in one of the preceding claims,
**characterised in that**
the four-point linkage (4) is designed so that the articulated arms (9, 10) merge completely into the flat support designed with a planar surface, thereby resulting overall in an intrinsically closed one-piece component.

4. Axle suspension as claimed in one of the preceding claims,
**characterised in that**
the four-point linkage (4) is articulatingly joined to the vehicle axle (1) and above it.

5. Axle suspension as claimed in one of the preceding claims,
**characterised in that**
the four-point linkage (4) is connected to the vehicle body by means of ball joints (5, 6) and to the vehicle axle (1) by ball joints (7, 8).

## Revendications

1. Suspension d'essieu pour essieux rigides de véhicules, notamment de véhicules utilitaires, dans laquelle il est prévu, pour le guidage de l'essieu, de chaque côté du véhicule et à peu près à la même hauteur, au moins un bras oscillant longitudinal (2, 3) appartenant à une paire de bras oscillants longitudinaux, s'étendant dans la direction longitudinale du véhicule, reliant l'essieu (1) du véhicule à la caisse du véhicule en étant mobile dans la direction verticale, et, différant de ce bras par sa position en hauteur, un bras oscillant quatre points (4) qui réunit les fonctions d'un bras oscillant multipoint et d'un dispositif stabilisateur s'opposant aux mouvements latéraux de roulis et de renversement grâce à des contraintes de torsion, le bras oscillant quatre points (4) comportant deux bras d'articulation (9, 10) s'étendant dans la direction longitudinale du véhicule, qui sont rigidement reliés l'un à l'autre par l'intermédiaire d'une structure porteuse plane (11) souple en torsion, le bras oscillant quatre points (4) étant relié, par l'intermédiaire d'articulations (5, 6), (7, 8) fixées aux extrémités des bras d'articulation (9, 10) et présentant une distance l'une de l'autre dans la direction transversale du véhicule, d'un côté à l'essieu (1) du véhicule et de l'autre côté à la caisse du véhicule,
**caractérisée en ce que** la structure porteuse plane (11) est réalisée sous forme d'une liaison fermée en forme de plaque qui présente une caractéristique de torsion définie.

2. Suspension d'essieu selon la revendication 1, **caractérisée en ce que** le bras oscillant quatre points (4) est réalisé sous forme d'un profilé creux.

3. Suspension d'essieu selon l'une des revendications précédentes, **caractérisée en ce que** le bras oscillant quatre points (4) est réalisé de telle façon que les bras d'articulation (9, 10) se fondent entièrement dans la structure porteuse plane configurée en une surface plane, de sorte que l'on obtienne au total un composant fermé monobloc.

4. Suspension d'essieu selon l'une des revendications précédentes, **caractérisée en ce que** le bras oscillant quatre points (4) est articulé sur l'essieu (1) du véhicule au-dessus de l'essieu.

5. Suspension d'essieu selon l'une des revendications précédentes, **caractérisée en ce que** le bras oscillant quatre points (4) est relié à la caisse du véhicule par l'intermédiaire d'articulations à rotule (5, 6), et à l'essieu (1) du véhicule par l'intermédiaire d'articulations à rotule (7, 8).
